(19) **Europäisches Patentamt / European Patent Office / Office européen des brevets**

(11) **EP 1 525 509 B1**

(12) **EUROPEAN PATENT SPECIFICATION**

(45) Date of publication and mention
of the grant of the patent:
**27.04.2011 Bulletin 2011/17**

(51) Int Cl.:
***G02F 1/133*** *(2006.01)*   ***G09G 3/36*** *(2006.01)*

(21) Application number: **02788925.2**

(86) International application number:
**PCT/KR2002/002076**

(22) Date of filing: **08.11.2002**

(87) International publication number:
**WO 2004/003642 (08.01.2004 Gazette 2004/02)**

(54) **LIQUID CRYSTAL DISPLAY AND DRIVING METHOD THEREOF**

FLÜSSIGKRISTALL -ANZEIGEVORRICHTUNG UND VERFAHREN ZU IHRER ANSTEUERUNG

AFFICHAGE A CRISTAUX LIQUIDES ET SON PROCEDE DE COMMANDE

(84) Designated Contracting States:
**AT BE BG CH CY CZ DE DK EE ES FI FR GB GR IE IT LI LU MC NL PT SE SK TR**

(30) Priority: **28.06.2002 KR 2002036980**

(43) Date of publication of application:
**27.04.2005 Bulletin 2005/17**

(73) Proprietor: **SAMSUNG ELECTRONICS CO., LTD.**
**Suwon-si,**
**Gyeonggi-do 442-742 (KR)**

(72) Inventor: **LEE, Seung-Woo**
**Geumcheon-ku**
**153-813 Seoul (KR)**

(74) Representative: **Modiano, Micaela Nadia**
**Modiano Josif Pisanty & Staub Ltd**
**Thierschstrasse 11**
**80538 München (DE)**

(56) References cited:
**JP-A- 2000 020 033     JP-A- 2001 042 287**
**JP-A- 2002 091 400     US-A- 5 576 729**
**US-A- 6 160 535     US-A1- 2001 004 253**
**US-B1- 6 335 719**

EP 1 525 509 B1

**Description**

**BACKGROUND OF THE INVENTION**

**(a) Field of the Invention**

The present invention relates to a liquid crystal display and a driving method thereof.

**(b) Description of Related Art**

A liquid crystal display (LCD) includes an upper panel including a common electrode and a plurality of color filters and covered with an alignment layer, a lower panel including a plurality of thin film transistors and a plurality of pixel electrodes and covered with an alignment layer, and a liquid crystal layer interposed between the upper panel and the lower panel. D ata voltages and a common voltage are respectively applied to the pixel electrodes and the common electrode to generate electric fields, which determine orientations of liquid crystal molecules in the liquid crystal layer. The orientations of the liquid crystal molecules in turn determine transmittance of light passing through the liquid crystal layer and a desired image is displayed by controlling the voltages applied to the electrodes.

A polarity of a data voltage applied to a pixel is reversed between adjacent two frames. In addition, the data voltages in a frame for the different pixels do not have the same polarity. This technique of differentiating the polarity of the data voltages for the pixels is called inversion, and the types of the inversion include column inversion, one-dot inversion, double-dot inversion and so on.

The column inversion reverses the polarity of the data voltages for adjacent pixel columns. The one-dot inversion and the double-dot inversion perform a line inversion as well as the column inversion. The one-dot inversion reverses the polarity of the data voltages for the pixels connected to a current gate line with respect to that for the pixels connected to a previous gate line. The two-dot inversion reverses the polarity of the data voltages for the pixels connected to the current two gate lines with respect to that for the pixels connected to the previous two gate lines.

When an image displayed on a screen has a pattern like the one-dot inversion and the column inversion, flicker is generated on the screen. The flicker is resulted from the difference in luminance of the pixels supplied with the data voltages with opposite polarities.

US-A-5 576 729 discloses a liquid crystal display device comprising polarity inversion means for controlling a polarity inversion of a driving voltage based on the display status of each pixel corresponding to at least a current one and a prior one of the scanning electrodes of an LCD panel when said selection and non-selection voltages applied by said first voltage applying means are switched between the scanning electrodes. The polarity inversion control circuit comprises an address generator, a memory element, a mismatch detection circuit, a counter circuit, a magnitude comparison circuit and a polarity inversion circuit. The magnitude comparison circuit compares the magnitude of a given value with the magnitude of value counted by the counter circuit and the polarity inversion circuit inverts the polarity inversion signal FRI synchronously with latch pulse LP, when it is found that the value counted by the counter circuit is greater than a given value from the comparison result of the magnitude comparison circuit.

US 2001/0004253 shows an LCD which selects a polarity inversion scheme dependent on whether horizontally adjacent pixels have similar values.

**SUMMARY OF THE INVENTION**

A motivation of the present invention is to provide a method of changing inversion type when a pattern generating flicker is determined.

The present invention changes the inversion type when a pattern generating flicker is determined.

A liquid crystal display according to an embodiment of the present invention includes a liquid crystal panel including a plurality of the data lines, a plurality of the gate lines, and a plurality of pixels arranged in a matrix, and the pixels include first to third color pixels. A data driver applies data voltages required for image display to the data lines. A signal controller receives a plurality of first to third color image data, supplies the received image data to the data driver, and generates control signals for driving the liquid crystal panel. The signal controller changes an inversion type when dot blocks are repeated in a predetermined pattern, each dot block includes a predetermined number of successive pairs of adjacent two pixels included in at least one color pixels among the first to third color pixels, and a magnitude of difference in gray between two pixels in each pair is equal to or larger than a critical value.

The dot blocks may include first and second dot blocks with the gray differences of opposite signs, and the predetermined pattern may include a first dot block in a first row and a second dot block located in the same columns as the first dot block and in a second row adjacent to the first row.

Alternatively, the predetermined pattern includes a first dot block in a first row and a second dot block located in the same columns as the first dot block and in a second row adjacent to the first row, and the first and second blocks have the gray differences of an equal opposite sign.

Preferably, the pixels in each row are grouped into a plurality of blocks, each block including even number of pixels, and the signal controller determines whether each block is one of the dot blocks. The signal controller may include a block counter for counting ordinal of each block among the blocks in a row and a line counter for counting ordinal of a row including each block in the row.

It is preferably that the block counter counts the blocks by counting clock cycles after a data enable signal indicating sections for inputting the image data becomes a high level, and the line counter counts the rows based on timing of a data enable signal indicating sections for inputting the image data for a row or on tiring of a horizontal synchronization signal.

A method of driving a liquid crystal display according to an embodiment of the present invention calculates difference in gray between every two image data applied to a pair of adjacent odd and even pixels in each block including pixels in a row for each of first to third colors. It is determined that a block is first or second dot block depending on a sign of the gray difference when a magnitude of the gray difference between the odd pixel and the even pixel in each pair in the block for at least one color is equal to or larger than a critical value. It is determined a pattern formed by first and second dot blocks located in adjacent row and the same columns. An inversion type of the liquid crystal display is changed when the pattern is repeated in the entire pixels.

When determining the pattern, it is preferably determined whether a previous block in a previous row and in columns is the first or second dot block when a current block in a current row and the columns is the first or second dot block.

Preferably, the current block is determined to be a one-dot block when the current block is the first dot block and the previous block is the second dot block, and the number of the one-dot blocks is compared with the number of total blocks.

When both the current block and the previous block are the first dot blocks or the second dot blocks, it is preferable that the current block is determined to be a double-dot block, and the number of the double-dot blocks is compared with the number of the total blocks. The number of the double-dot blocks may be preferably compared with the total number of the first and second dot blocks when the total number of the first and second dot blocks is equal to or larger than a predetermined number of the total number of the blocks.

The current block is determined to be a first double-dot block when both the current block and the previous block are the first dot blocks. Likewise, the current block is determined to be a second double-dot block when both the current block and the previous block are the second dot blocks. The inversion type is preferably changed when the number of the first dot blocks is larger than a first critical value and the number of the first double-dot blocks is equal to a predetermined percentage of the number the first dot blocks, or the number of the second dot blocks is larger than a second critical value and the number of the second double-dot blocks is equal to a predetermined number of the second dot blocks.

## BRIEF DESCRIPTION OF THE DRAWINGS

Fig. 1 is a schematic block diagram of an LCD according to an embodiment of the present invention.
Figs. 2 and 3 show images that generate flicker in an LCD subject in one-dot inversion and column inversion, respectively.
Figs. 4, 6 and 8 are flow charts illustrating methods of changing the inversion type according to embodiments of the present invention.
Figs. 5A and 5B show one dot block.
Figs. 7a and 7b show double-dot blocks.

## DETAILED DESCRITPION OF PREFERRED EMBODIMENTS

The present invention now will be described more fully hereinafter with reference to the accompanying drawings, in which preferred embodiments of the invention are shown. The present invention may, however, be embodied in many different forms and should not be construed as limited to the embodiments set forth herein.

Now, liquid crystal displays and driving methods thereof according to an embodiment of the present invention will be described in detail with reference to the accompanying drawings.

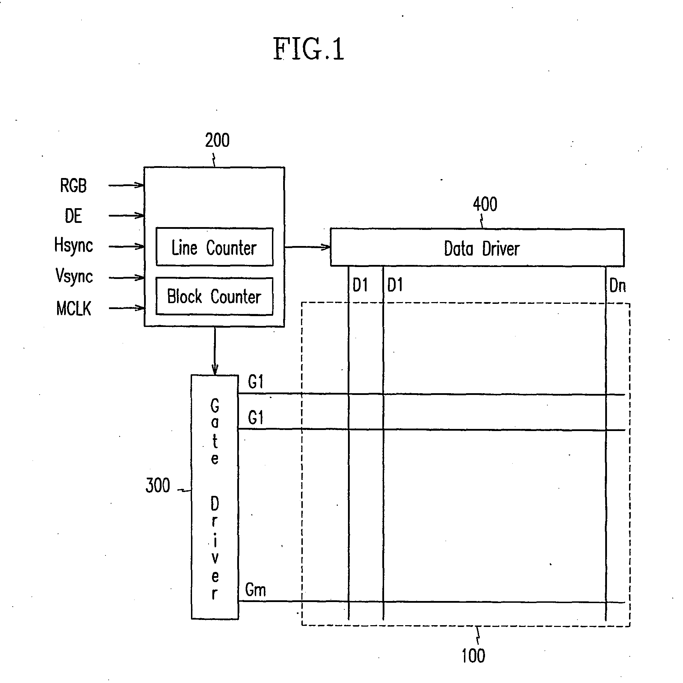

First, a schematic configuration of an LCD according to an embodiment of the present invention and flicker generated in an LCD are described with reference to Figs.1-3.

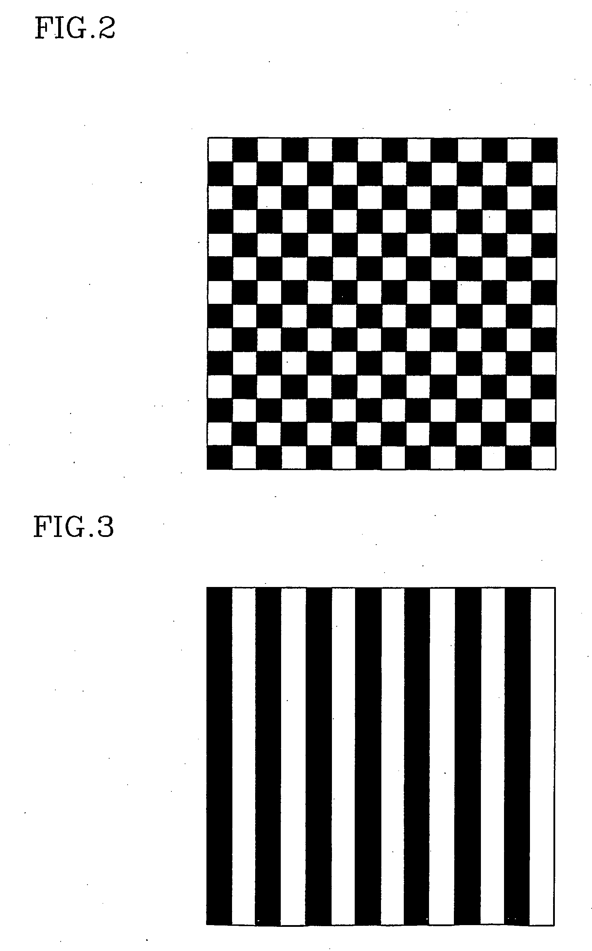

Fig. 1 is a block diagram of an LCD according to an embodiment of the present invention, and Figs. 2 and 3 show images that generate flicker in an LCD subject in one-dot inversion and column inversion, respectively.

Referring to Fig. 1, an LCD according to an embodiment of the present invention includes a liquid crystal panel 100, a signal controller 200, a gate driver 300, and a data driver 400.

The liquid crystal panel 100 includes a plurality of a plurality of gate lines G1-Gm extending in a transverse direction and a plurality of the data lines D1-Dn extending in a longitudinal direction. Two gate lines and two data lines define a pixel area, which is occupied by a pixel.

The signal controller 200 receives a plurality of red (R), green (G) and blue (B) image data from an external graphics controller (not shown), a vertical synchronization signal Vsync for distinguishing frames, a horizontal synchronization signal Hsync for distinguishing rows, a data enable signal DE halving a high level during the output of the image data for indicating valid image data, and a main clock MCLK. The signal controller. 200 processes and provides the RGB image data for the data driver 400, and generates a plurality of control signals for controlling the gate driver 300 and the data driver 400.

The gate driver 300 generates scanning signals from a gate-on voltage and a gate-off voltage supplied from a driving voltage generator (not shown) and it applies the scanning signals to the gate lines in synchronization with the control signals supplied from the signal controller 200.

The data driver 400 selects data voltages from a plurality of gray voltages supplied from a gray voltage generator (not shown) based on the image data supplied from the signal controller 200, and it applies the selected data voltages to appropriate data lines in response to the control signals supplied from the signal controller 200.

When the LCD subject to inversion such as one-dot inversion displays an image (referred to as one-dot pattern hereinafter) shown in Fig. 2 or the LCD subject to column inversion display an image (referred to as column pattern hereinafter) shown in Fig. 3, flicker may be generated.

This embodiment groups the pixels into a plurality of blocks, each block including a predetermined number of successive pixels in a row, and analyzes a pattern of each block for determining the one-dot pattern or the column pattern. A multiple of the number of the pixels in a block is preferably equal to a horizontal resolution.

It is assumed that the number of the pixels in each block is N, and the number of the blocks is M. For example, an SXGA LCD with a resolution of $1280 \times 1024$ includes 81,920 blocks when N=16.

The signal controller 200 analyzes a pattern to be displayed by the image data for each block and determines whether the pattern generates the flicker. The signal controller 200 changes the inversion type if the pattern is determined to generate the flicker. The signal controller 200 includes a line counter 210 and a block counter 220 for calculating the ordinals of each block, i.e., for determining which line (row) the block belongs to and how the block stands in the line. The line counter 210 and the block counter 220 count based on the data enable signal DE or the synchronization signals Hsync and Vsync.

For example, the line counter 210 counts the lines by counting high level sections of the data enable signal DE when RGB image data for a line is inputted during a high level section of the data enable signal after a pulse of the vertical synchronization signal Vsync. Alternatively, the line counter 210 counts the lines by counting high level sections of the horizontal synchronization signal Hsync.

The block counter 220 counts the blocks by raising one for every predetermined number of the periods of the main clock MCLK during a high level section of the data enable signal DE since the image data for a pixel or a plurality of pixels are transmitted in synchronization with the main clock MCLK. Accordingly, the block counter 220 counts one for N periods of the main clock MCLK when the RGB image data for one pixel are transmitted for a clock. Alternatively, the block counter 220 starts counting after a predetermined number of clocks from the input of a pulse of the horizontal synchronization signal Hsync when the data enable signal DE becomes high after the predetermined number of clocks after the pulse of the horizontal synchronization signal Hsync.

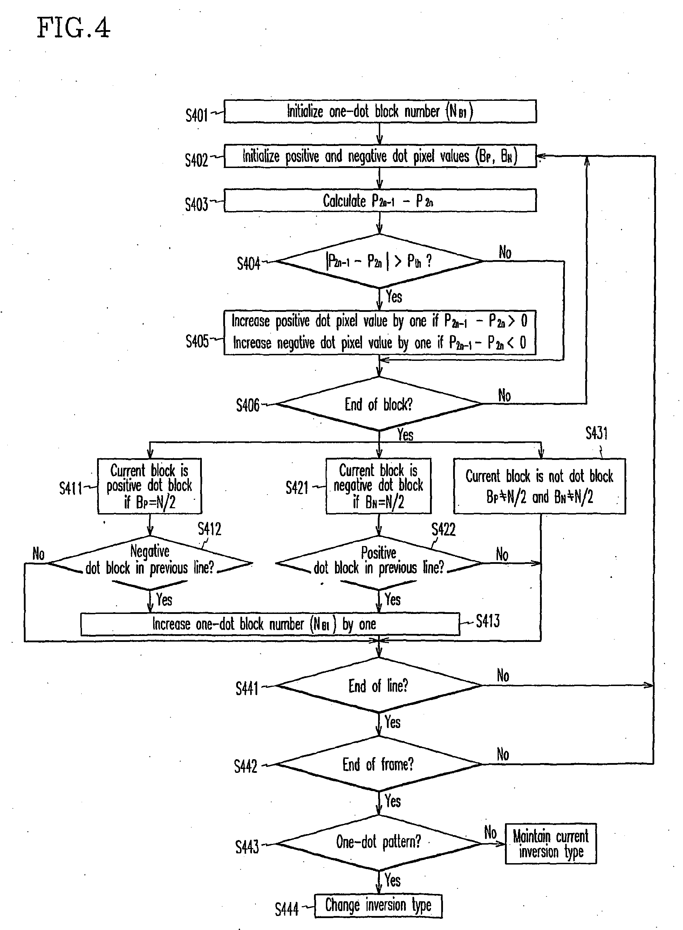

A method of changing the inversion type of an LCD according to an embodiment of the present invention after the determination of the pattern causing the flicker is described in detail with reference to Figs. 4-8.

This embodiment calculates the difference in gray of the RGB image data between two adjacent pixels in a block, and increases the value of a positive dot pixel value BP or a negative dot pixel value BN when any one of the gray differences of the respective RGB image data is larger than a critical value. Then, this embodiment determines a type of the block from the positive dot pixel value BP or the negative dot pixel value BN and thus the pattern to be formed by the block to determine the generation of the flicker.

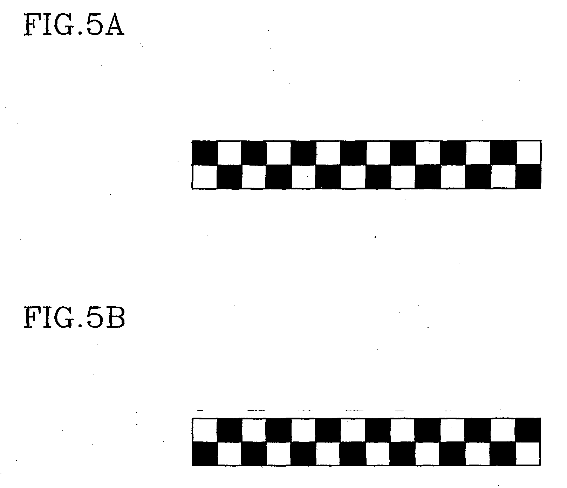

First, a method of changing the inversion type of an LCD subject to the one-dot inversion upon the determination of the generation of the flicker is described in detail with reference to Figs. 4, 5A and 5B.

Fig. 4 is a flow chart illustrating a method of changing the inversion type according to an embodiment of the present invention, and Figs. 5A and 5B show one dot blocks.

As shown in Fig. 4, the value of a register representing the number NB1 of one-dot blocks is initialized when a frame starts (S401), and a pair of registers representing a positive dot pixel values BP and a negative dot pixel values BN (5402).

The positive dot pixel value BP is defined as the number of pairs of adjacent odd and even pixels satisfying Relation 1, where the gray of the odd pixel is larger than that of the even pixel. Likewise, the negative dot pixel value BN is defined as the number of pairs of adjacent odd and even pixels such that the gray of the odd pixel is smaller than that of the even pixel.

$$|P_{2n-1} - P_{2n}| > Pth, \qquad\qquad (1)$$

where $P_{2n-1}$ and $P_{2n}$ indicate the grays of the odd pixel and the even pixel, respectively, Pth indicates the critical value, and n is a natural number from 1 to N/2.

The gray difference ($P_{2n-1}$-$P_{2n}$) between an odd pixel and an even pixel adjacent to each other in a block is calculated (S403), and it is determined whether the absolute value of the gray difference ($P_{2n-1}$-$P_{2n}$) is larger than the critical value Pth as shown in Relation 1 (S404). The signal controller 200 determines the grays $P_{2n-1}$ and $P_{2n}$ of the pixels from image data received from a graphics controller. The gray differences for the RGB are independently determined, and the critical values Pth may be different for the RGB. In particular, since a dot pattern for the green color G is easily perceived compared with the red color R and the blue color B even though the gray difference ($P_{2n-1}$-$P_{2n}$) is small, the critical value Pth for the green color G is set to be smaller than those for the red and blue colors R and B. For example, the critical values Pth for the red, green and blue colors R, G and B are 16, 8 and 16, respectively.

When any of the RGB image data for the pair of the odd and even pixels satisfies Relation 1, the positive dot pixel value BP is increased by one if the gray difference ($P_{2n-1}$-$P_{2n}$) calculated in the step S403 is positive, while the negative dot pixel value BN is increased by one if the gray difference ($P_{2n-1}$-$P_{2n}$) is negative (S405). When Relation 1 is not satisfied in the step 5404 or after the step 5405 is completed for those satisfying Relation 1, it is determined whether the pixel pair is the last pair of the block (S406). If it is determined that the pixel pair is not the last pair of the block, the procedure returns to the step (S404) such that the gray difference of a next pair of adjacent two pixels is calculated. However, if it is determined that the pixel pair is the last pair, it is determined whether the block corresponds to a one-dot block since the gray differences for all pairs of the adjacent two pixels in the block are calculated.

In detail, if the positive dot pixel value BP is equal to half of the number N of the pixels in the block, it is written into a memory that the current block is a positive dot block (S411), it is determined from block information of a previous line stored in the memory whether a block in the previous line located at an equivalent position as the current block is a negative dot block (S412). The line counter 210 and the block counter 220 confirm which block belongs to the previous line and stands at the equivalent position in the previous line as the current block. The memory may be incorporated in the signal controller 200 or external to the signal controller. If it is determined that the current block is a positive dot block and the equivalent block in the previous line is a negative dot block as shown in Fig. 5A, the number NB1 of the one-dot blocks are increased by one (S413).

Likewise, if the negative dot pixel value BN is equal to N/2, it is written into the memory that the current block is a negative dot block (S421), it is determined from the block information of the previous line stored in the memory whether the equivalent block in the previous line is a positive dot block (S422). If it is determined that the current block is a negative dot block and the equivalent block in the previous line is a positive dot block as shown in Fig. 5B, the number NB1 of the one-dot blocks are increased by one (S413).

If both the positive dot pixel value BP and the negative dot pixel value BN are not equal to N/2, it is written into the memory that the current block is not a dot block (S431).

After it is determined that the current block is a one-dot block, it is determined whether the current block is the last block in the line (S441). For example, when a block includes 16 pixels, the block counter 220 counts the blocks by considering the image data for 16 pixels based on internal or external clock of the signal controller 200. Since an SXGA LCD includes 80 blocks in a line, it is determined that the current block.is the last block when the count value of the block counter 220 is equal to 80. If the count value of the block counter 220 is not equal to 80, it is determined whether a next block is a one-dot block through the steps S402 to S441.

If the current block is determined to be the last block of the block, it is determined whether the line including the block is the last line, i.e., located at an end of a frame through the line counter 210 (S442). The line counter 210, as described above, counts the lines whenever the data enable signal DE or the horizontal synchronization signal Hsync becomes an enable state, and it is determined to be the end of the frame if the count number of the line counter 210 reaches the vertical resolution of the LCD. If the current line is not the end of the frame, the count value of the block counter 220 is initialized and the determination for blocks of a next line is performed through the steps S402 to S442.

After the determination for all blocks in a frame through the steps S401 to 5442 is finished, it is determined whether the number NB1 of the one-dot blocks is equal to a value that results in the determination that the current frame displays a one-dot pattern (S443). For example, it is assumed that the current frame displays a one-dot pattern if the one-dot blocks in a frame occupy 60% of the total blocks in a frame. The n, it is determined whether the number NB1 of the one-dot blocks is equal to or larger than 49,152 (=81,920 × 0.6) for an SXGA panel when each block includes 16 pixels.

If the current frame is determined to display a one-dot pattern, the signal controller 200 changes the one-dot inversion into another inversion type (S444). For example, column inversion is adapted for a dual-source panel.

The above-described embodiment of the present invention reduces the flicker by changing the one-dot inversion generating the flicker into another inversion type.

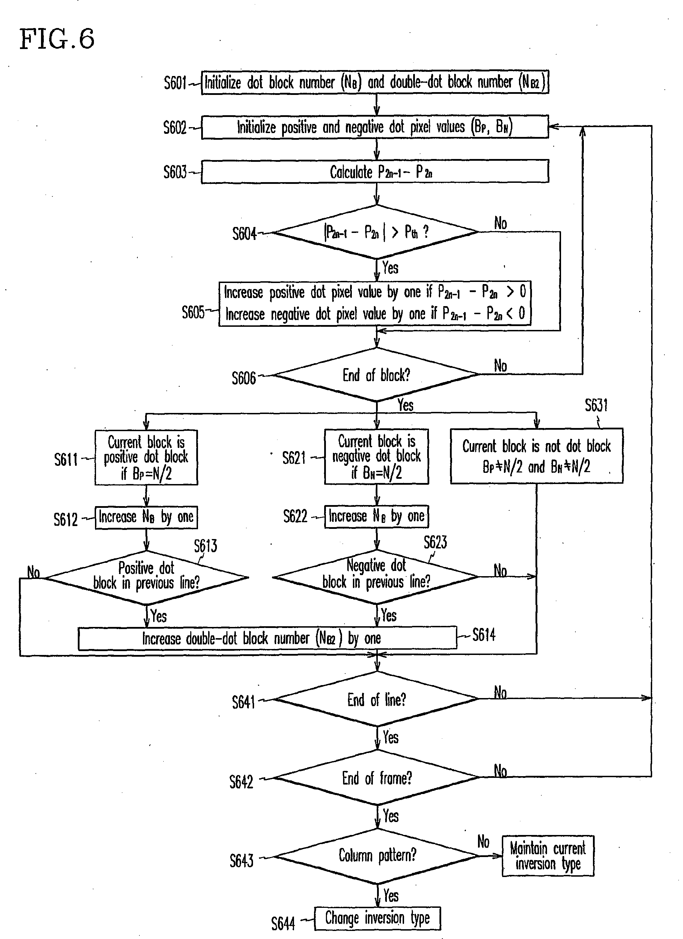

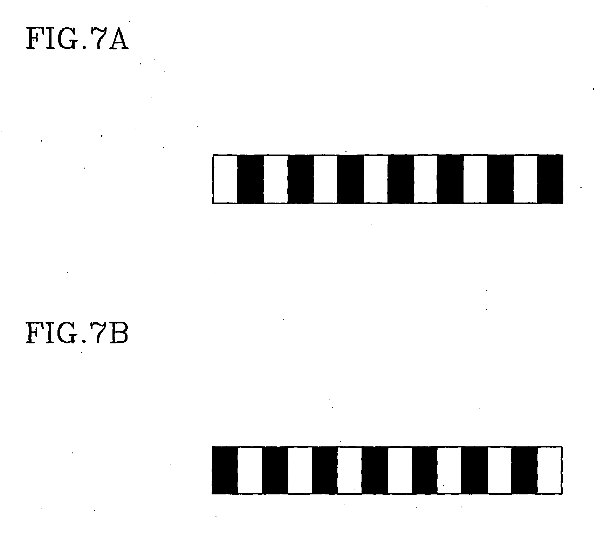

Although the above-described embodiment illustrate the change of the one-dot inversion generating the flicker into another inversion type, the column inversion may generate flicker, which will be described with reference to Figs. 6, 7a and 7b.

Fig. 6 is a flow chart illustrating a method of changing the inversion type according to another embodiment of the present invention, and Figs. 7a and 7b show double-dot blocks.

A method for changing the column inversion into another inversion, when a column pattern is determined, is similar to that shown in Fig. 4 except that a double-dot block is determined when both of two equi-positional blocks in two adjacent lines are positive dot blocks or negative dot blocks.

In detail, the values of registers indicating the number NB of dot blocks and the number NB2 of double-dot blocks are initialized as shown in Fig. 6 (S601), and the values of registers indicating a positive dot pixel value BP and a negative dot pixel value BN for a block is initialized (S602). Next, the positive dot pixel value BP and the negative dot pixel value BN of a current block are calculated by the gray comparison shown in Relation 1 like the steps S403 to 5406 shown in Fig. 4 (S603~S606).

When the positive dot pixel value BP for the block is equal to N/2, it is written into a memory that the current block is a positive dot block (S611) and the number NB of the dot blocks is increased by one (S612). In addition; it is determined from block information of a previous line stored in the memory whether an equi-positional block in the previous line is a positive dot block (S613). If both the two blocks are positive dot blocks as shown in Fig. 7a, the number NB2 of the double-dot blocks is increased by one (S614).

Likewise, the negative dot pixel value BN is equal to N/2, it is written into a memory that the current block is a negative dot block (S621), the number NB of the dot blocks is increased by one (S622). In addition, it is determined from block information of the previous line stored in the memory whether an equi-positional block in the previous line is a negative dot block (S623). If both the two blocks are negative dot blocks as shown in Fig. 7B, the number NB2 of the double-dot blocks is increased by one (S614).

If both the positive dot pixel value BP and the negative dot pixel value BN are not equal to N/2, it is written in the memory that the current block is not a dot block (S631).

After it is determined whether the current block is a dot block or a double-dot block, it is determined whether the current block is the last block in the line as illustrated in the step S441 shown in Fig. 4 (S641). If it is determined that the current block is not the last block of the line, it is determined whether a next block is a one-dot block or a double-dot block through the steps 5602 to S641. If the current block is determined to be the last block of the block, it is determined whether the line including the block is located at an end of a frame as shown in the step S442 shown in Fig. 4 (S642). If the current line is not the end of the frame, the count value of the block counter 220 is initialized and the determination for blocks of a next line is performed through the steps S602 to S642.

After the determination for all blocks in a frame through the steps S601 to 계 S642 is finished, it is determined whether the number NB2 of the double-dot blocks is equal to a value that results in the determination that the current frame displays a column pattern (S643). For example, a current frame is determined to display a column pattern when the number NB of the dot blocks is equal to 60% of the number M of the total blocks and the number NB2 of the double-dot blocks is equal to 90% of the number NB of the dot blocks. Alternatively, a current frame is determined to display a column pattern when the number NB2 of the double-dot blocks is equal to a predetermined percentage of the number M of the total blocks. If the current frame is determined to display a column pattern, the signal controller 200, changes the column inversion into another inversion (S644).

The above-described embodiment of the present invention reduces the flicker by changing the column inversion into another inversion upon the generation of a column pattern,

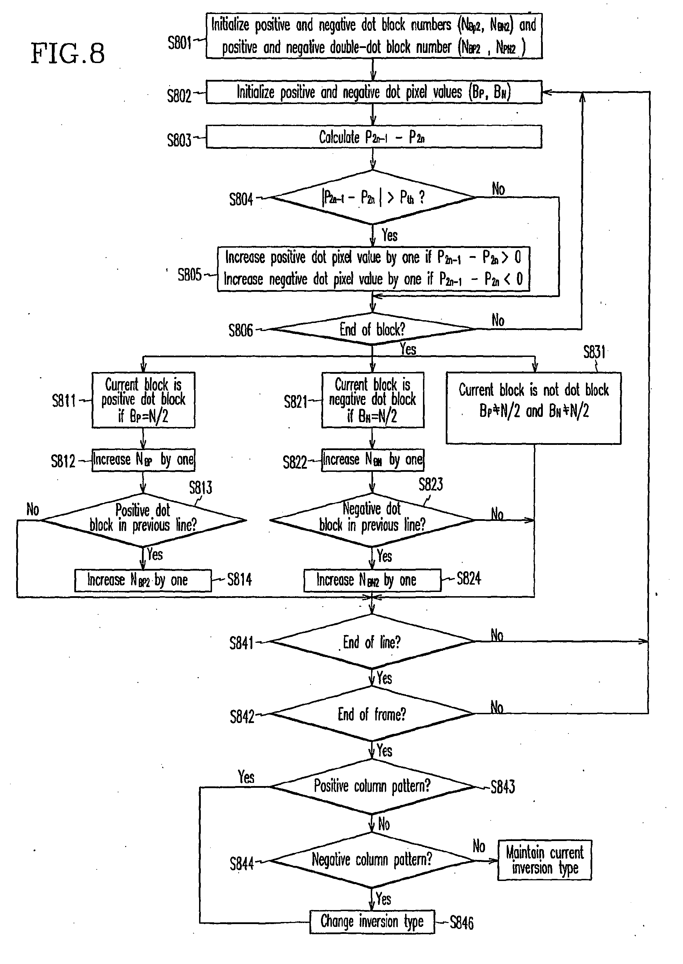

Although the embodiment shown in Fig. 6 determines the generation of the flicker based on successive positive and negative dot blocks, they may be separately determined, which will be described hereinafter with reference to Fig. 8.

Fig. 8 is a flow chart illustrating a method of changing the inversion type according to another embodiment of the present invention.

A method for changing the inversion type according to the embodiment of the present invention shown in Fig. 8 is similar to that shown in Fig. 6 except that positive double-dot blocks and negative double-dot block are stored in different manner.

In detail, the values of registers indicating the number NBP of the positive dot blocks, the number NBN of the negative dot blocks, the number NBP2 of the positive double-dot blocks, and the number NBN2 of the negative double-dot blocks are initialized (S801), and the values of registers indicating a positive dot pixel value BP and a negative dot pixel value BN for a block is initialized are initialized (S802). Next, the positive dot pixel value BP and the negative dot pixel value BN of a current block are calculated by the gray comparison shown in Relation 1 like the steps 5603 to S606 shown in Fig. 6 (S803~S806).

When the current block is a positive dot block, it is written that the current block is a positive dot block (S811) and the number NBP of the positive dot blocks is increased by one like the steps S611 to S613 shown in Fig. 6 (S812). It is determined whether a dot block of a previous line is a positive dot block (S813), and the number NBP2 of the positive double-dot blocks is increased by one if the dot blocks of both the current line and the previous line are positive dot blocks (S814).

Likewise, when the current block is a negative dot block, it is written that the current block is a negative dot block (S821), the number NBN of the negative dot blocks is increased by one (S822). It is determined whether a dot block of a previous line is a negative dot block (S823), the number NBN2 of the negative double-dot blocks is increased by one if the dot blocks of both the current line and the previous line are negative dot blocks (S824).

If both the positive dot pixel value BP and the negative dot pixel value BN are not equal to N/2, it is written that the current block is not a dot block (S831) .

Next, it is determined whether each block in a frame is positive or negative dot block or positive or negative double-dot block like the steps S641 and S642 shown in Fig. 6 (S841 and S842). After the determination for all blocks in a frame through the steps S801 to S842, it is determined whether a current frame displays a column pattern. The current frame is determined to display a (positive) column pattern and the inversion type is changed when the number NBP of the positive dot blocks is equal to or larger than a critical value of the number M of the total blocks and the number NBP2 of the positive double-dot blocks is equal to or larger than a critical value of the number NBP of the positive dot blocks (S843). When the condition illustrated in the step S843 is not satisfied, it is determined whether the number NBN of the negative dot blocks is equal to or larger than a critical value of the number M of the total blocks and the number NBN2 of the negative double-dot blocks is equal to or larger than a critical value of the number NBN of the negative dot blocks. If the condition is satisfied (i.e., a negative column pattern is generated), the inversion type is changed (S844). The sequence of the steps S843 and S844 may be exchanged.

The present invention reduces flicker by determining patterns causing flicker from the image data for the pixels and changing the inversion type upon the determination of the patterns resulting in the flicker.

While the present invention has been described in detail with reference to the preferred embodiments, those skilled in the art will appreciate that various modifications and substitutions can be made thereto without departing from the scope of the present invention as set forth in the appended claims.

## Claims

1. A liquid crystal display comprising:

   a liquid crystal panel (100) including a plurality of data lines (D1..Dn) extending in a column direction, a plurality of gate lines (G1..Gm) in a row direction, and a plurality of pixels displaying an image based on signals received from the data lines (D1..Dn) and the gate lines (G1..Gm) and arranged in a matrix,
   a predetermined number of successive pairs of pixels in a row being grouped in a block (N), the liquid crystal panel (100) including a plurality of blocks (N);
   a data driver (400) adapted to apply data voltages required for image display to the data lines (D1..Dn); and
   a signal controller (200) adapted to receive a plurality of RGB image data, supply the received RGB image data to the data driver (400), and generate control signals for driving the liquid crystal panel (100), the signal controller (200) being further adapted to:
   calculate (S403, S603, S803) difference in gray between RGB image data applied to each pair of adjacent odd (P2n-1) and even (P2n) pixels present in each block (N), said calculation being performed for each of first to third colors of said RGB image data;
   determine (S404, S604, S804) that a block is first or second dot block depending on a sign of the gray difference when a magnitude of the gray difference between the odd pixel (P2n-1) and the even pixel (P2n) in the each pair in the block for at least one color is equal to or larger than a critical value (Pth);
   determine (S443, S643, S843, S844) a pattern formed by first and second dot blocks located in adjacent row and the same columns; and
   change (S444, 5644, 5846) an inversion type of the liquid crystal display when the pattern is repeated in the entire blocks, the signal controller comprising:
   a block counter (220) for calculating the ordinal of each block among the blocks in a row; and
   a line counter (210) for calculating the ordinal of a row including the blocks.

2. The liquid crystal display of claim 1, wherein the critical value (Pth) has the first to third values for the first to third colors, and the first to third values are equal or different.

3. The liquid crystal display of claim 2, wherein the first to third colors are red (R), green (G) and blue (B) colors, respectively, and the second value is smaller than the first and third values.

4. The liquid crystal display of claim 1, wherein the dot blocks include first and second dot blocks with the gray differences of opposite signs, and the predetermined pattern includes a first dot block in a first row and a second dot block located in the same columns as the first dot block and in a second row adjacent to the first row.

5. The liquid crystal display of claim 1, wherein the predetermined pattern includes a first dot block in a first row and a second dot block located in the same columns as the first dot block and in a second row adjacent to the first row, and the first and second blocks have the gray differences of an equal opposite sign.

6. The liquid crystal display of claim 1, wherein the block counter (220) is adapted to count the blocks by counting clock cycles after a data enable signal (DE) indicating sections for inputting the RGB image data becomes a high level.

7. The liquid crystal display of claim 1, wherein the block counter (220) is adapted to count the blocks by counting clock cycles after a predetermined number of clocks from raise of a horizontal synchronization signal (Hsync) to be input to the signal controller (200) to a high level.

8. The liquid crystal display of claim 1, wherein the line counter (210) is adapted to count the rows based on timing of a data enable signal (DE) indicating sections for inputting the RGB image data for a row or on timing of a horizontal synchronization signal (Hsync).

9. A method of driving a liquid crystal display comprising
a liquid crystal panel (100) including a plurality of data lines (D1..Dn) extending in a column direction, a plurality of gate lines (G1..Gm) in a row direction, and a plurality of pixels arranged in a matrix, and
a signal controller (200) adapted to receive a plurality of the RGB image data and adapted to generate control signals for driving the liquid crystal panel (100), the method comprising:
for each block including a predetermined number of successive pairs of pixels in a row, calculating (S403, S603, S803) difference in gray between RGB image data applied to each pair of adjacent odd (P2n-1) and even (P2n) pixels in said block for each of first to third colors of said RGB image data;
determining (S404, S604, S804) that a block is first or second dot block depending on a sign of the gray difference when a magnitude of the gray difference between the odd pixel (P2n-1) and the even pixel (P2n) in the each pair in the block for at least one color is equal to or larger than a critical value (Pth);
determining (S443, S643, S843, S844) a pattern formed by first and second dot blocks located in adjacent row and the same columns; and
changing (S444, S644, S846) an inversion type of the liquid crystal display when the pattern is repeated in the entire blocks,
wherein the signal controller comprising:

     a block counter (220) for calculating the ordinal of each block among the blocks in a row; and
     a line counter (210) for calculating the ordinal of a row including the blocks.

10. The method of claim 9, wherein the critical value has the first to third values for the first to third colors, and the first to third values are equal or different.

11. The method of claim 10, wherein the first to third colors are red (R), green (G) and blue (B) colors, respectively, and the second value is smaller than the first and third values.

12. The method of claim 9, wherein the determination of a pattern determines whether a previous block in a previous row and in columns is the first or second dot block when a current block in a current row and the columns is the first or second dot block.

13. The method of claim 12, wherein the rows including the blocks are counted based on timing of a data enable signal (DE) indicating sections for inputting the RGB image data for a row or on timing of a horizontal synchronization signal (Hsync).

**14.** The method of claim 12, wherein the blocks are counted by counting clock cycles after a horizontal synchronization signal (Hsync) to be input to the signal controller (200) becomes in a high level.

**15.** The method of claim 12, wherein the current block is determined to be a one-dot block when the current blocks the first dot block and the previous block is the second dot block, and the change of an inversion type comprises comparison of the number of the one-dot blocks with the number of total blocks.

**16.** The method of claim 12, wherein the current block is determined to be a double-dot block when both the current block and the previous block are the first dot blocks or the second dot blocks, and the change of an inversion type comprises comparison of the number of the double-dot blocks with the number of total blocks.

**17.** The method of claim 16, wherein the change of an inversion type further comprises comparison of the number of the double-dot blocks with the total number of the first and second dot blocks when the total number of the first and second dot blocks is equal to or larger than a predetermined number of the total number of the blocks.

**18.** The method of claim 12, wherein the current block is determined to be a first double-dot block when both the current block and the previous block are the first dot blocks, or the current block is determined to be a second double-dot block when both the current block and the previous block are the second dot blocks, and the inversion type is changed when the number of the first dot blocks is larger than a first critical value and the number of the first double-dot blocks is equal to a predetermined percentage of the number the first dot blocks, or the number of the second dot blocks is larger than a second critical value and the number of the second double-dot blocks is equal to a predetermined number of the second dot blocks.


**Patentansprüche**

**1.** Eine Flüssigkristallanzeige, die Folgendes umfasst:

ein Flüssigkristall-Panel (100) einschließlich einer Vielzahl von Daten-Leitungen (D1 Dn), die sich in einer Spaltenrichtung erstrecken, einer Vielzahl von Gate-Leitungen (G1 Gm) in einer Zeilenrichtung und einer Vielzahl von Pixeln, die ein Bild darstellen, welches auf Signalen basiert, die von den Daten-Leitungen (D1 ... Dn) und den Gate-Leitungen (G 1 ... Gm) empfangen und in einer Matrix angeordnet werden;
eine vordefinierte Anzahl aufeinanderfolgender Paare von Pixeln in einer Zeile, die in einem Block (N) gruppiert werden, wobei das Flüssigkristall-Panel (100) eine Vielzahl von Blöcken (N) einschließt;
einen Datentreiber (400), der ausgebildet ist, um Datenspannungen, die zur Bilddarstellung benötigt werden, an die Daten-Leitungen (D 1 ... Dn) anzulegen; und
eine Signalsteuerung (200), die ausgebildet ist, um eine Vielzahl von RGB-Bilddaten zu empfangen, die empfangenen RGB-Bilddaten an den Datentreiber (400) zu senden und Steuersignale zu erzeugen, um das Flüssigkristall-Panel (100) anzusteuern, wobei die Signalsteuerung (200) weiter ausgebildet ist, um:

den Unterschied in den Graustufen zwischen RGB-Bilddaten zu berechnen (S403, S603, S803), die auf jedes Paar benachbarter ungeradzahliger (P2n-1) und geradzahliger (P2n) Pixel angewandt werden, welche in jedem Block (N) vorhanden sind, wobei die Berechnung für jede der ersten bis dritten Farben der RGB-Bilddaten durchgeführt wird;
zu bestimmen (S404, S604, S804), dass ein Block ein erster oder zweiter Punktblock ist, abhängig von einem Vorzeichen des Grauunterschieds, wenn eine Größe des Grauunterschieds zwischen dem ungeradzahligen Pixel (P2n-1) und dem geradzahligen Pixel (P2n) in jedem Paar im Block für mindestens eine Farbe größer als oder gleich einem kritischen Wert (Pth) ist;
ein Muster zu bestimmen (S443, S643, S843, S844), das von ersten und zweiten Punktblöcken geformt wird, die sich in benachbarten Zeilen und denselben Spalten befinden; und
einen Inversionstyp der Flüssigkristallanzeige zu ändern (S444, S644, S846), wenn das Muster in den gesamten Blöcken wiederholt wird, wobei die Signalsteuerung Folgendes umfasst:

einen Blockzähler (220) zur Berechnung der Ordinalzahl jedes Blocks unter den Blöcken in einer Zeile; und
einen Zeilenzähler (210) zur Berechnung der Ordinalzahl einer Zeile, die die Blöcke einschließt.

**2.** Die Flüssigkristallanzeige gemäß Anspruch 1, worin der kritische Wert (Pth) die ersten bis dritten Werte für die ersten bis dritten Farben hat und die ersten bis dritten Werte gleich oder unterschiedlich sind.

3. Die Flüssigkristallanzeige gemäß Anspruch 2, worin die ersten bis dritten Farben rote (R), grüne (G) beziehungsweise blaue (B) Farben sind und der zweite Wert kleiner ist als die ersten und dritten Werte.

4. Die Flüssigkristallanzeige gemäß Anspruch 1, worin die Punktblöcke erste und zweite Punktblöcke mit den Grauunterschieden entgegengesetzter Vorzeichen einschließen und das vordefinierte Muster einen ersten Punktblock in einer ersten Zeile und einen zweiten Punktblock einschließt, der sich in denselben Spalten befindet wie der erste Punktblock und in einer zweiten Zeile angrenzend an die erste Zeile.

5. Die Flüssigkristallanzeige gemäß Anspruch 1, worin das vordefinierte Muster einen ersten Punktblock in einer ersten Zeile und einen zweiten Punktblock einschließt, der sich in denselben Spalten befindet wie der erste Punktblock und in einer zweiten Zeile angrenzend an die erste Zeile, und die ersten und zweiten Blöcke die Grauunterschiede eines gleichen entgegengesetzten Vorzeichens haben.

6. Die Flüssigkristallanzeige gemäß Anspruch 1, worin der Blockzähler (220) ausgebildet ist, um die Blöcke durch Zählen von Taktzyklen zu zählen, nachdem ein Daten-Freigabesignal (data enable, DE), das Abschnitte zur Eingabe der RGB-Bilddaten angibt, einen hohen Wert erreicht hat.

7. Die Flüssigkristallanzeige gemäß Anspruch 1, worin der Blockzähler (220) ausgebildet ist, um die Blöcke durch das Zählen von Taktzyklen nach einer vordefinierten Anzahl von Takten vom Anstieg eines Horizontal-Synchronsignals (horizontal synchronization signal, Hsync), das in die Signalsteuerung (200) eingegeben werden soll, auf ein hohes Niveau zu zählen.

8. Die Flüssigkristallanzeige gemäß Anspruch 1, worin der Zeilenzähler (210) ausgebildet ist, um die Zeilen auf der Grundlage der zeitlichen Abstimmung eines Daten-Freigabesignals (DE) zu zählen, das Abschnitte zur Eingabe der RGB-Bilddaten für eine Zeile angibt, oder auf der Grundlage der zeitlichen Abstimmung eines Horizontal-Synchronsignals (Hsync).

9. Ein Verfahren zur Ansteuerung einer Flüssigkristallanzeige, das Folgendes umfasst:

ein Flüssigkristall-Panel (100) einschließlich einer Vielzahl von Daten-Leitungen (D1 ... Dn), die sich in einer Spaltenrichtung erstrecken, einer Vielzahl von Gate-Leitungen (G1 ... Gm) in einer Zeilenrichtung und einer Vielzahl von Pixeln, die in einer Matrix angeordnet sind, und
eine Signalsteuerung (200), die ausgebildet ist, um eine Vielzahl der RGB-Bilddaten zu empfangen, und ausgebildet, um Steuersignale zur Ansteuerung des Flüssigkristall-Panels (100) zu erzeugen, wobei das Verfahren Folgendes umfasst:

für jeden Block, der eine vordefinierte Anzahl aufeinanderfolgender Paare von Pixeln in einer Zeile einschließt, Berechnung (S403, S603, S803) des Unterschiedes in den Graustufen zwischen RGB-Bilddaten, die auf jedes Paar benachbarter ungeradzahliger (P2n-1) und geradzahliger (P2n) Pixel in dem Block für jede der ersten bis dritten Farben der RGB-Bilddaten angewandt werden;
Bestimmung (S404, S604, S804), dass ein Block ein erster oder zweiter Punktblock ist, abhängig von einem Vorzeichen des Grauunterschieds, wenn eine Größe des Grauunterschieds zwischen dem ungeradzahligen Pixel (P2n-1) und dem geradzahligen Pixel (P2n) in jedem Paar im Block für mindestens eine Farbe größer als oder gleich einem kritischen Wert (Pth) ist;
Bestimmung (S443, S643, S843, S844) eines Musters, das von ersten und zweiten Punktblöcken geformt wird, die sich in benachbarten Zeilen und denselben Spalten befinden; und
Änderung (S444, S644, S846) eines Inversionstyps der Flüssigkristallanzeige, wenn das Muster in den gesamten Blöcken wiederholt wird,
wobei die Signalsteuerung Folgendes umfasst:

einen Blockzähler (220) zur Berechnung der Ordinalzahl jedes Blocks unter den Blöcken in einer Zeile, und
einen Zeilenzähler (210) zur Berechnung der Ordinalzahl einer Zeile, die die Blöcke einschließt.

10. Das Verfahren gemäß Anspruch 9, worin der kritische Wert die ersten bis dritten Werte für die ersten bis dritten Farben hat und die ersten bis dritten Werte gleich oder verschieden sind.

**11.** Das Verfahren gemäß Anspruch 10, worin die ersten bis dritten Farben rote (R), grüne (G) beziehungsweise blaue (B) Farben sind und der zweite Wert kleiner ist als die ersten und dritten Werte.

**12.** Das Verfahren gemäß Anspruch 9, worin die Bestimmung eines Musters bestimmt, ob ein vorhergehender Block in einer vorhergehenden Zeile und in Spalten der erste oder zweite Punktblock ist, wenn ein aktueller Block in einer aktuellen Zeile und den Spalten der erste oder zweite Punktblock ist.

**13.** Das Verfahren gemäß Anspruch 12, worin die Zeilen, die die Blöcke einschließen, auf der Grundlage der zeitlichen Abstimmung eines Daten-Freigabesignals (DE) gezählt werden, das Abschnitte zur Eingabe der RGB-Bilddaten für eine Zeile angibt, oder auf der Grundlage der zeitlichen Abstimmung eines Horizontal-Synchronsignals (Hsync).

**14.** Das Verfahren gemäß Anspruch 12, worin die Blöcke durch das Zählen von Taktzyklen gezählt werden, nachdem ein Horizontal-Synchronsignal (Hsync), das in die Signalsteuerung (200) eingegeben werden soll, einen hohen Wert erreicht hat.

**15.** Das Verfahren gemäß Anspruch 12, worin bestimmt wird, dass der aktuelle Block ein Ein-Punkt-Block ist, wenn der aktuelle Block der erste Punktblock ist und der vorhergehende Block der zweite Punktblock ist, und die Änderung eines Inversionstyps den Vergleich der Anzahl der Ein-Punkt-Blöcke mit der Anzahl aller Blöcke umfasst.

**16.** Das Verfahren gemäß Anspruch 12, worin bestimmt wird, dass der aktuelle Block ein Doppel-Punkt-Block ist, wenn sowohl der aktuelle Block als auch der vorhergehende Block die ersten Punktblöcke oder die zweiten Punktblöcke sind, und die Änderung eines Inversionstyps den Vergleich der Anzahl der Doppel-Punkt-Blöcke mit der Anzahl aller Blöcke umfasst.

**17.** Das Verfahren gemäß Anspruch 16, worin die Änderung eines Inversionstyps weiter den Vergleich der Anzahl an Doppel-Punkt-Blöcken mit der Gesamtzahl der ersten und zweiten Punktblöcke umfasst, wenn die Gesamtzahl der ersten und zweiten Punktblöcke größer als oder gleich einer vordefinierten Anzahl der Gesamtzahl der Blöcke ist.

**18.** Das Verfahren gemäß Anspruch 12, worin bestimmt wird, dass der aktuelle Block ein erster Doppel-Punkt-Block ist, wenn sowohl der aktuelle Block als auch der vorhergehende Block die ersten Punktblöcke sind, oder bestimmt wird, dass der aktuelle Block ein zweiter Doppel-Punkt-Block ist, wenn sowohl der aktuelle Block als auch der vorhergehende Block die zweiten Punktblöcke sind, und der Inversionstyp geändert wird, wenn die Anzahl der ersten Punktblöcke größer ist als ein erster kritischer Wert und die Anzahl der ersten Doppel-Punkt-Blöcke gleich einem vordefinierten Prozentsatz der Anzahl der ersten Punktblöcke ist, oder die Anzahl der zweiten Punktblöcke größer ist als ein zweiter kritischer Wert und die Anzahl der zweiten Doppel-Punkt-Blöcke gleich einer vordefinierten Anzahl der zweiten Punktblöcke Ist.

**Revendications**

**1.** Dispositif d'affichage à cristaux liquides, comprenant :

un panneau à cristaux liquides (100), comprenant une pluralité de lignes de données (D1..Dn) s'étendant dans une direction de colonne, une pluralité de lignes de grille (G1..Gm) s'étendant dans une direction de ligne, et une pluralité de pixels, affichant une image d'après des signaux reçus des lignes de données (D1..Dn) et agencés en une matrice,
un nombre prédéterminé de paires successives de pixels dans une ligne, groupés en un bloc (N), le panneau à cristaux liquides (100) incluant une pluralité de blocs (N) ;
un pilote de données (400), adapté pour appliquer des tensions de données, requises pour un affichage d'image, aux lignes de données (D1..Dn) ; et
un contrôleur de signaux (200), adapté pour recevoir une pluralité de données d'image RVB, fournir les données d'image RVB reçues au pilote de données (400), et générer des signaux de commande pour commander le panneau à cristaux liquides (100), le contrôleur de signaux étant en outre adapté pour :
calculer (S403, S603, S803) la différence de gris entre les données d'image RVB appliquées à chaque paire de pixels impairs (P2n-1) et pairs (P2n) adjacents, présents dans chaque bloc (N), ledit calcul étant effectué pour chacune des première à troisième couleurs desdites données d'image RVB ;
déterminer (S404, S604, S804) qu'un bloc est un premier ou un deuxième bloc de points, selon un signe de la différence de gris, lorsqu'une valeur de la différence de gris, entre le pixel impair (P2n-1) et le pixel pair (P2n) dans chaque paire dans le bloc pour au moins une couleur est égale ou supérieure à une valeur critique (Pth) ;
déterminer (S443, S643, S843, S844) un motif formé par des premiers et deuxièmes blocs de points situés dans une ligne adjacente et les mêmes colonnes ; et
modifier (S444, S644, S846) un type d'inversion du dispositif d'affichage à cristaux liquides lorsque le motif est répété dans les blocs entiers, le contrôleur de signaux comprenant :
un compteur de blocs (220), pour calculer l'ordinal de chaque bloc parmi les blocs dans une ligne ; et
un compteur de lignes (210), pour calculer l'ordinal d'une ligne incluant les blocs.

2. Dispositif d'affichage à cristaux liquides selon la revendication 1, dans lequel la valeur critique (Pth) présente les première à troisième valeurs pour les première à troisième couleurs, et les première à troisième valeurs sont égales ou différentes.

3. Dispositif d'affichage à cristaux liquides selon la revendication 2, dans lequel les première à troisième couleurs sont les couleurs rouge (R), vert (V) et bleu (B), respectivement, et la deuxième valeur est inférieure aux première et troisième valeurs.

4. Dispositif d'affichage à cristaux liquides selon la revendication 1, dans lequel les blocs de points comprennent des premier et deuxième blocs de points, avec les différences de gris de signe opposé, et le motif prédéterminé comprend un premier bloc de points dans une première ligne et un deuxième bloc de points, situé dans les mêmes colonnes que le premier, bloc de points et dans une deuxième ligne, adjacente à la première ligne.

5. Dispositif d'affichage à cristaux liquides selon la revendication 1, dans lequel le motif prédéterminé comprend un premier bloc de points dans une première ligne et un deuxième bloc de points, situé dans les mêmes colonnes que le premier bloc de points et dans une deuxième ligne, adjacente à la première ligne, et les premier et deuxième blocs ont les différences de gris de signe égal opposé.

6. Dispositif d'affichage à cristaux liquides selon la revendication 1, dans lequel le compteur de blocs (220) est adapté pour compter les blocs par comptage des cycles d'horloge, après qu'un signal d'activation de données (DE), indiquant des sections pour entrer les données d'image RVB, prenne un niveau haut.

7. Dispositif d'affichage à cristaux liquides selon la revendication 1, dans lequel le compteur de blocs (220) est adapté pour compter les blocs par comptage des cycles d'horloge, après qu'un nombre prédéterminé de cycles d'horloge à partir de la montée d'un signal de synchronisation horizontal (Hsync) devant être entré au contrôleur de signaux (200) prenne un niveau haut.

8. Dispositif d'affichage à cristaux liquides selon la revendication 1, dans lequel le compteur de lignes (210) est adapté pour compter les lignes, d'après le positionnement temporel d'un signal d'activation de données (DE), indiquant des sections pour introduire les données d'image RVB pour une ligne, ou d'après le positionnement temporel d'un signal de synchronisation horizontal (Hsync).

9. Procédé de commande d'un dispositif d'affichage à cristaux liquides, comprenant :

un panneau à cristaux liquides (100), comprenant une pluralité de lignes de données (D1..Dn) s'étendant dans une direction de colonne, une pluralité de lignes de grille (G1..Gm) s'étendant dans une direction de ligne, et une pluralité de pixels, agencés en une matrice, et
un contrôleur de signaux (200), adapté pour recevoir une pluralité de données d'image RVB, et adapté pour générer des signaux de commande pour commander le panneau à cristaux liquides (100), le procédé comprenant :

pour chaque bloc comprenant un nombre prédéterminé de paires successives de pixels dans une ligne, calculer (S403, S603, S803) la différence de gris entre les données d'image RVB appliquées à chaque paire de pixels impairs (P2n-1) et pairs (P2n) adjacents, dans ledit bloc, pour chacune des première à troisième couleurs desdites données d'image RVB ;
déterminer (S404, S604, S804) qu'un bloc est un premier ou un deuxième bloc de points, selon un signe de la différence de gris, lorsqu'une valeur de la différence de gris, entre le pixel impair (P2n-1) et le pixel pair (P2n) dans chaque paire dans le bloc pour au moins une couleur est égale ou supérieure à une valeur critique (Pth) ;
déterminer (S443, S643, S843, S844) un motif formé par des premiers et deuxièmes blocs de points situés dans une ligne adjacente et les mêmes colonnes ; et
modifier (S444, S644, S846) un type d'inversion du dispositif d'affichage à cristaux liquides lorsque le motif est répété dans les blocs entiers,
dans lequel le contrôleur de signaux comprend :

un compteur de blocs (220), pour calculer l'ordinal de chaque bloc parmi les blocs dans une ligne ; et
un compteur de lignes (210), pour calculer l'ordinal d'une ligne incluant les blocs.

**10.** Procédé selon la revendication 9, dans lequel la valeur critique présente les première à troisième valeurs pour les première à troisième couleurs, et les première à troisième valeurs sont égales ou différentes.

**11.** Procédé selon la revendication 10, dans lequel les première à troisième couleurs sont les couleurs rouge (R), vert (V) et bleu (B), respectivement, et la deuxième valeur est inférieure aux première et troisième valeurs.

**12.** Procédé selon la revendication 9, dans lequel la détermination d'un motif détermine si un bloc précédent dans une ligne précédente et dans des colonnes est le premier ou le deuxième bloc de points, lorsqu'un bloc actuel dans une ligne actuelle et les colonnes est le premier ou le deuxième bloc de points.

**13.** Procédé selon la revendication 12, dans lequel les lignes incluant les blocs sont comptées d'après le positionnement temporel d'un signal d'activation de données (DE), indiquant des sections pour introduire les données d'image RVB pour une ligne, ou d'après le positionnement temporel d'un signal de synchronisation horizontal (Hsync).

**14.** Procédé selon la revendication 12, dans lequel les blocs sont comptés par comptage des cycles d'horloge, après qu'un signal de synchronisation horizontal (Hsync), à introduire au contrôleur de signaux (200), prenne un niveau haut.

**15.** Procédé selon la revendication 12, dans lequel le bloc actuel est déterminé comme étant un bloc à un point, lorsque le bloc actuel est le premier bloc de points et que le bloc précédent est le deuxième bloc de points, et le changement d'un type d'inversion comprend la comparaison du nombre des blocs à un point au nombre total de blocs.

**16.** Procédé selon la revendication 12, dans lequel le bloc actuel est déterminé comme étant un bloc à point double, lorsqu'à la fois le bloc actuel et le bloc précédent sont les premiers blocs de points ou les deuxièmes blocs de points, et le changement d'un type d'inversion comprend la comparaison du nombre des blocs à point double au nombre total de blocs.

**17.** Procédé selon la revendication 16, dans lequel le changement d'un type d'inversion comprend en outre la comparaison du nombre des blocs à point double au nombre total des premier et deuxième blocs de points, lorsque le nombre total des premier et deuxième blocs de points est égal ou supérieur à un nombre prédéterminé du nombre total des blocs.

**18.** Procédé selon la revendication 12, dans lequel le bloc actuel est déterminé comme étant un premier bloc à point double, lorsqu'à la fois le bloc actuel et le bloc précédent sont les premiers blocs de points, ou le bloc actuel est déterminé comme étant un deuxième bloc à point double, lorsqu'à la fois le bloc actuel et le bloc précédent sont les deuxièmes blocs de points, et le type d'inversion est modifié lorsque le nombre des premiers blocs de points est supérieur à une première valeur critique, et que le nombre des premiers blocs à point double est égal à un pourcentage prédéterminé du nombre des premiers blocs de points, ou que le nombre des deuxièmes blocs à point double est supérieur à une deuxième valeur critique, et que le nombre des deuxièmes blocs à point double est égal à un nombre prédéterminé des deuxièmes blocs de points.

# FIG.1

RGB

DE

Hsync

Vsync

MCLK

200

Line Counter

Block Counter

400

Data Driver

D1  D1                                    Dn

G1

G1

300

Gate Driver

Gm

100

EP 1 525 509 B1

FIG.2

FIG.3

# FIG.4

S401 — Initialize one-dot block number (N$_{BI}$)

S402 — Initialize positive and negative dot pixel values (B$_P$, B$_N$)

S403 — Calculate P$_{2n-1}$ − P$_{2n}$

S404 — |P$_{2n-1}$ − P$_{2n}$| > P$_{th}$ ?  →  No

Yes

S405 — Increase positive dot pixel value by one if P$_{2n-1}$ − P$_{2n}$ > 0
Increase negative dot pixel value by one if P$_{2n-1}$ − P$_{2n}$ < 0

S406 — End of block?  →  No

Yes

S411 — Current block is positive dot block if B$_P$=N/2

S421 — Current block is negative dot block if B$_N$=N/2

S431 — Current block is not dot block B$_P$≠N/2 and B$_N$≠N/2

S412 — Negative dot block in previous line?  →  No

S422 — Positive dot block in previous line?  →  No

Yes

Yes

S413 — Increase one-dot block number (N$_{BI}$) by one

S441 — End of line?  →  No

Yes

S442 — End of frame?  →  No

Yes

S443 — One-dot pattern?  →  No  →  Maintain current inversion type

Yes

S444 — Change inversion type

FIG.5A

FIG.5B

# FIG.6

S601 — Initialize dot block number (N$_B$) and double-dot block number (N$_{B2}$)

S602 — Initialize positive and negative dot pixel values (B$_P$, B$_N$)

S603 — Calculate P$_{2n-1}$ − P$_{2n}$

S604 — $|P_{2n-1} - P_{2n}| > P_{th}$ ?  — No

Yes

S605 — Increase positive dot pixel value by one if P$_{2n-1}$ − P$_{2n}$ > 0
Increase negative dot pixel value by one if P$_{2n-1}$ − P$_{2n}$ < 0

S606 — End of block? — No

Yes

S611 — Current block is positive dot block if B$_P$=N/2

S621 — Current block is negative dot block if B$_N$=N/2

S631 — Current block is not dot block B$_P$≠N/2 and B$_N$≠N/2

S612 — Increase N$_B$ by one

S622 — Increase N$_B$ by one

S613 — Positive dot block in previous line? — No

S623 — Negative dot block in previous line? — No

Yes — Yes

S614 — Increase double-dot block number (N$_{B2}$) by one

S641 — End of line? — No

Yes

S642 — End of frame? — No

Yes

S643 — Column pattern? — No — Maintain current inversion type

Yes

S644 — Change inversion type

FIG.7A

FIG.7B

**FIG.8**

S801 — Initialize positive and negative dot block numbers ($N_{Bp2}$, $N_{BN2}$) and positive and negative double-dot block number ($N_{BP2}$, $N_{PN2}$)

S802 — Initialize positive and negative dot pixel values ($B_P$, $B_N$)

S803 — Calculate $P_{2n-1} - P_{2n}$

S804 — $|P_{2n-1} - P_{2n}| > P_{th}$ ? — No

Yes

S805 — Increase positive dot pixel value by one if $P_{2n-1} - P_{2n} > 0$
Increase negative dot pixel value by one if $P_{2n-1} - P_{2n} < 0$

S806 — End of block? — No

Yes

S811 — Current block is positive dot block if $B_P = N/2$

S812 — Increase $N_{BP}$ by one

S813 — Positive dot block in previous line? — No

Yes

Increase $N_{BP2}$ by one — S814

S821 — Current block is negative dot block if $B_N = N/2$

S822 — Increase $N_{BN}$ by one

S823 — Negative dot block in previous line? — No

Yes

Increase $N_{BN2}$ by one — S824

S831 — Current block is not dot block $B_P \neq N/2$ and $B_N \neq N/2$

S841 — End of line? — No

Yes

S842 — End of frame? — No

Yes

S843 — Positive column pattern? — Yes

No

S844 — Negative column pattern? — No — Maintain current inversion type

Yes

Change inversion type — S846

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5576729 A
- US 20010004253 A